(19) Europäisches Patentamt
European Patent Office
Office européen des brevets

(11) Veröffentlichungsnummer: **0 135 090**
**A1**

(12) # EUROPÄISCHE PATENTANMELDUNG

(21) Anmeldenummer: **84109098.8**

(22) Anmeldetag: **01.08.84**

(51) Int. Cl.[4]: **C 08 F 10/00**
C 08 F 4/62

(30) Priorität: **11.08.83 DE 3329015**

(43) Veröffentlichungstag der Anmeldung:
**27.03.85 Patentblatt 85/13**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Klaerner, Peter, Dr.**
**Hauptstrasse 62**
**D-6719 Battenberg(DE)**

(72) Erfinder: **Gruber, Wolfgang, Dr.**
**Lorscher Ring 2b**
**D-6710 Frankenthal(DE)**

(72) Erfinder: **Bachl, Robert, Dr.**
**Parsevalstrasse 2**
**D-6520 Worms 1(DE)**

(72) Erfinder: **Richter, Konrad, Dr.**
**Kriemhildstrasse 58**
**D-6700 Ludwigshafen(DE)**

(72) Erfinder: **Gropper, Hans, Dr.**
**155 Sternstrasse**
**D-6700 Ludwigshafen(DE)**

(54) **Verfahren zum Herstellen von Polymerisaten des Ethylens mittels eines Kieselsäure-Xerogel/Chromtrioxid-Katalysators.**

(57) Rahmen ist ein Verfahren zum Herstellen von Ethylen-Homopolymerisaten sowie Ethylen-Copolymerisaten mit α-Monoolefinen mittels eines Kieselsäure-Xerogel/Chromtrioxid-Katalysators, der erhalten wird, wenn man (1) zunächst ein Kieselsäure-Xerogel herstellt, indem man (1.1) von einem Kieselsäure-Hydrogel ausgeht, das kugelförmig ist und erhalten wird, indem man (1.1.1) in einen Mineralsäure-Strom unter Drall eine Wasserglaslösung einbringt, (1.1.2) das dabei entstehende Kieselsäure-Hydrosol tropfenförmig versprüht, (1.1.3) das Hydrosol im Versprühen zum Hydrogel erstarren läßt und (1.1.4) das Hydrogel von Salzen befreit, (1.2) aus dem Hydrogel mittels einem Alkanol bzw. Alkanon das Wasser extrahiert, (1.3) das entwässerte Gel trocknet (Xerogel-Bildung) und (1.4) das Xerogel zerkleinert, (2) dann das Xerogel mit Chromtrioxid oder einer in Chromtrioxid übergehenden Chromverbindung belädt und (3) schließlich das beladene Xerogel in einem Sauerstoff enthaltenden Gasstrom erhitzt. Charakteristikum ist, daß zusätzlich zum Katalysator ein Dialkylaluminiumalkoxid als Cokatalysator eingesetzt wird.

# Verfahren zum Herstellen von Polymerisaten des Ethylens mittels eines Kieselsäure-Xerogel/Chromtrioxid-Katalysators

Die vorliegende Erfindung liegt im Rahmen eines Verfahrens zum Herstellen von Ethylen-Homopolymerisaten sowie Ethylen-Copolymerisaten mit untergeordneten Mengen an einpolymerisierten $C_3$- bis $C_{12}$-, insbesondere $C_3$- bis $C_8$-α-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Kieselsäure-Xerogel/Chromtrioxid-Katalysators, der erhalten wird, wenn man

(1) zunächst ein feinteiliges Kieselsäure-Xerogel herstellt, indem man

(1.1) von einem 10 bis 25, vorzugsweise 12 bis 20 und insbesondere 14 bis 20 Gewichtsprozent Feststoff (berechnet als Siliciumdioxid) enthaltenden Kieselsäure-Hydrogel ausgeht, das weitgehend kugelförmig ist, einen Teilchendurchmesser im Bereich von 1 bis 8, insbesondere 2 bis 6 mm hat und erhalten wird, indem man

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 %, insbesondere mindestens 90 % des in dem Hydrogel enthaltenen Wassers extrahiert,

(1.3) das dabei erhaltene entwässerte, mit der organischen Flüssigkeit behandelte Gel solange trocknet, bis bei 180°C unter einem Vakuum von 10 Torr während 30 Minuten kein Gewichtsverlust mehr auftritt (Xerogel-Bildung) und

HWz/P

(1.4) das so gewonnene Xerogel auf Teile mit einem Durchmesser von 20 bis 2000, insbesondere 40 bis 300µm bringt,

(2) dann dieses Xerogel (1) aus einer 0,05- bis 5-gewichtsprozentigen Lösung von Chromtrioxid in einem $C_3$- bis $C_5$-Alkanon oder einer 0,05- bis 15-gewichtsprozentigen Lösung einer unter den Bedingungen der Stufe (3) in Chromtrioxid übergehenden Chromverbindung in einem $C_1$- bis $C_4$-Alkanol - wobei das jeweilige Lösungsmittel nicht mehr als 20, vorzugsweise nicht mehr als 5, Gewichtsprozent Wasser enthalten darf - heraus unter Verdampfen des Lösungsmittels mit der gewünschten Menge Chrom belädt und

(3) schließlich das hierbei resultierende Produkt (2) in einem wasserfreien, Sauerstoff in einer Konzentration von über 10 Volumenprozent enthaltenden Gasstrom 10 bis 1 000, insbesondere 60 bis 300 Minuten auf einer Temperatur von 400 bis 1 100, insbesondere 700 bis 950°C hält.

Polymerisationsverfahren dieser Art sind bekannt, wobei im gegebenen Zusammenhang als repräsentativ insbesondere das in der US-PS 4,037,042 beschriebene gelten kann.

Die genannte - in der Großtechnik mit Erfolg betriebene - Verfahrensart hat, ebenso wie in Parallele zu setzende andere Verfahrensarten, zum Kernstück einen in besonderer Weise ausgestalteten Chromtrioxid-Katalysator.

Die besonderen Ausgestaltungen der Chromtrioxid-Katalysatoren werden bekanntlich vorgenommen, um bestimmte Ziele zu erreichen, wie - u.a. - die folgenden:

(a) Katalysatoren, die eine erhöhte Ausbeute an Polymerisat zu liefern vermögen, nämlich Katalysatoren mit einer erhöhten Produktivität, d.h. solche, bei denen die Menge an gebildetem Polymerisat pro Gewichtseinheit des Katalysators erhöht ist.

(b) Katalysatoren, die Polymerisate zu liefern vermögen, die bei der Verarbeitung keinen oder nur einen relativ geringen Abfall des Schmelzindex' ("MI-Drop") aufweisen.

(c) Katalysatoren, die ihre positiven Wirkungen auch bei relativ niederen Temperaturen entfalten; - was z.B. für Trockenphasenpolymerisationen von Bedeutung sein kann.

(d) Katalysatoren, durch welche die morphologischen Eigenschaften der Polymerisate in bestimmter Weise beeinflußt werden, etwa im Sinne einer einheitlichen Korngröße und/oder eines hohen Schüttgewichtes; - was für die technische Beherrschung der Polymerisationssysteme, die Aufarbeitung der Polymerisate und/oder die Verarbeitbarkeit der Polymerisate von Bedeutung sein kann.

(e) Katalysatoren, die einfach und sicher herzustellen und gut handzuhaben sind.

(f) Katalysatoren, die es ermöglichen, bei Polymerisationen unter der Einwirkung von Molekulargewichtsreglern, wie Wasserstoff, die Molekulargewichte der Polymerisate besonders effektiv zu regeln.

(g) Katalysatoren, die es erlauben, Polymerisate mit besonders ausgeprägter Spannungsrißbeständigkeit zu erzeugen; - einer Eigenschaft, die z.B. besonders wichtig ist für Flüssigkeits-Behältnisse, namentlich Behältnisse, in denen aggresive Flüssigkeiten aufbewahrt werden sollen.

(h) Katalysatoren, die auf spezielle Polymerisationsverfahren zugeschnitten sind; - etwa solche, die z.B. entweder auf die spezifischen Besonderheiten der Suspensionspolymerisation oder auf die spezifischen Besonderheiten der Trockenphasenpolymerisation abgestimmt sind.

(i) Katalysatoren, mittels derer Polymerisate mit einerseits einer hohen Molmasse (Fertigteilfestigkeit) sowie andererseits einer problemlosen Verarbeitbarkeit erhalten werden können; - d.h. hochmolekulare Polymerisate, die sich auch bei relativ niederen Verarbeitungstemperaturen und/oder durch relativ schwache Verarbeitungskräfte relativ schnell zu einwandfreien Formteilen verarbeiten lassen.

(j) Katalysatoren, die zu Polymerisaten mit einer besonders hohen Steifigkeit führen; - einer Eigenschaft, die für viele Anwendungsgebiete erwünscht ist.

Nach den bisherigen Erfahrungen gibt es unter den mannigfachen Zielen etliche Ziele, die man durch besondere Ausgestaltungen der Chromtrioxid--Katalysatoren nur dann erreichen kann, wenn man andere Ziele zurücksetzt.

Hier setzt die Aufgabe an, die zur vorliegenden Erfindung geführt hat: Das gut bewährte Verfahren der eingangs definierten Art mit dem Chromtrioxid-Katalysator der dort definierten Art so weiterzubilden, daß die Zielvorgaben gemäß (b), (c), (g) und (i) - als Gesamtkomplex gesehen - in

besonders hohem Maße erreicht werden, ohne wesentliche Zurücksetzung der – wiederum als Gesamtkomplex betrachtet – Zielvorgaben gemäß (a), (d) und (j).

Es wurde gefunden, daß diese Aufgabe gelöst werden kann, wenn man das in Rede stehende Verfahren unter zusätzlicher Mitverwendung eines Dialkylaluminiumalkoxids als Cokatalysator durchführt.

Gegenstand der vorliegenden Erfindung ist dementsprechend ein Verfahren zum Herstellen von Ethylen-Homopolymerisaten sowie Ethylen-Copolymerisaten mit untergeordneten Mengen an einpolymerisierten $C_3$- bis $C_{12}$-, insbesondere $C_3$- bis $C_8$-α-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Kieselsäure-Xerogel/Chromtrioxid-Katalysators, der erhalten wird, wenn man

(1) zunächst ein feinteiliges Kieselsäure-Xerogel herstellt, indem man

(1.1) von einem 10 bis 25, vorzugsweise 12 bis 20 und insbesondere 14 bis 20 Gewichtsprozent Feststoff (berechnet als Siliciumdioxid) enthaltenden Kieselsäure-Hydrogel ausgeht, das weitgehend kugelförmig ist, einen Teilchendurchmesser im Bereich von 1 bis 8, insbesondere 2 bis 6 mm hat und erhalten wird, indem man

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 %, insbesondere mindestens 90 % des in dem Hydrogel enthaltenen Wassers extrahiert,

(1.3) das dabei erhaltene entwässerte, mit der organischen Flüssigkeit behandelte Gel solange trocknet, bis bei 180°C unter einem Vakuum von 10 Torr während 30 Minuten kein Gewichtsverlust mehr auftritt (Xerogel-Bildung) und

(1.4) das so gewonnene Xerogel auf Teile mit einem Durchmesser von 20 bis 2000, insbesondere 40 bis 300µm bringt,

(2) dann dieses Xerogel (1) aus einer 0,05- bis 5-gewichtsprozentigen Lösung von Chromtrioxid in einem $C_3$- bis $C_5$-Alkanon oder einer 0,05- bis 15-gewichtsprozentigen Lösung einer unter den Bedingungen der Stufe (3) in Chromtrioxid übergehenden Chromverbindung in einem $C_1$- bis $C_4$-Alkanol - wobei das jeweilige Lösungsmittel nicht mehr als 20, vorzugsweise nicht mehr als 5, Gewichtsprozent Wasser enthalten darf - heraus unter Verdampfen des Lösungsmittels mit der gewünschten Menge Chrom belädt und

(3) schließlich das hierbei resultierende Produkt (2) in einem wasserfreien, Sauerstoff in einer Konzentration von über 10 Volumenprozent enthaltenden Gasstrom 10 bis 1 000, insbesondere 60 bis 300 Minuten auf einer Temperatur von 400 bis 1 100, insbesondere 700 bis 950°C hält.

Das erfindungsgemäße Verfahren ist dadurch gekennzeichnet, daß zusätzlich zum Katalysator ein Cokatalysator eingesetzt wird, der besteht aus einem Dialkylaluminiumalkoxid der Formel

$$R^1_2AlR^2,$$

worin stehen

$R^1$ für eine $C_1$- bis $C_{12}$-, insbesondere $C_1$- bis $C_8$-Alkylgruppe, vor allem die Ethylgruppe, und

$R^2$ für eine $C_1$- bis $C_{12}$-, insbesondere $C_1$- bis $C_8$-Alkoxigruppe, vor allem die Ethoxigruppe,

mit der Maßgabe, daß das Atomverhältnis Chrom in dem Katalysator : Aluminium in dem Cokatalysator 1 : 0,05 bis 1 : 100, insbesondere 1 : 0,1 bis 1 : 50 beträgt.

Zur Herstellung des beim erfindungsgemäßen Verfahren einzusetzenden Katalysators ist im einzelnen das Folgende zu sagen:

(1) Erste Stufe

(1.1) Charakteristisch für diese Stufe ist, daß ein Kieselsäure-Hydrogel eingesetzt wird, das einen relativ hohen Feststoffgehalt hat, weitgehend kugelförmig ist und - insbesondere - auf eine spezielle Weise hergestellt worden ist. Diese spezielle Weise der Herstellung ist in ihren Unterstufen (1.1.1), (1.1.2) sowie (1.1.3) im einzelnen beschrieben, z.B. in der US-PS 3,872,217; eine Beschreibung der gleichen Unterstufen und zusätzlich der Unterstufe (1.1.4) findet sich z.B. in der US-PS 4,037,042. Das insoweit in den beiden genannten Patentschriften Offenbarte soll, auf dem Wege über das Zitat, ein Bestandteil der vorliegenden Beschreibung sein; - womit in dieser einschlägige nähere Darlegungen entbehrlich werden.

(1.2) Die Extraktion des Wassers aus dem Kieselsäure-Hydrogel mittels der oben bezeichneten organischen Flüssigkeit kann in üblichen Extraktionsvorrichtungen erfolgen. Geeignete Vorrichtungen sind z.B. Säulenextraktoren. Als organische Flüssigkeiten haben sich aus der Reihe der Alkanole die folgenden (nach abnehmender Wirksamkeit - nicht jedoch nach abnehmender Wirtschaftlichkeit - geordnet) bewährt: tert.-Butanol, i-Propanol, Ethanol und Methanol. Aus der Reihe der Alkanone - die insgesamt gegenüber den Alkanolen zu bevorzugen sind - hat sich vor allem Acton bewährt. Es versteht sich von selbst, daß die organische Flüssigkeit aus einem oder mehreren der in Betracht kommenden Individuen bestehen kann, wobei in jedem Fall die Flüssigkeit vor dem Extrahieren weniger als 5 und vorzugsweise weniger als 3 Gewichtsprozent Wasser enthalten sollte.

(1.3) Die Überführung des mit der organischen Flüssigkeit behandelten Gels in das Xerogel (Trocknung) kann wiederum in einschlägig üblichen Trocknungsvorrichtungen erfolgen. Dabei erhält man die besten Ergebnisse, wenn man bei Produkttemperaturen von 80 bis 200°C und Drücken von 1 bis 250 Torr trocknet, wobei man - aus Gründen des Dampfdruckes - einer steigenden Temperatur auch einen steigenden Druck zuordnen sollte et vice versa. Durch strömende Schleppgase, etwa Stickstoff, kann der Trocknungsvorgang - insbesondere bei relativ hohen Drücken - beschleunigt werden.

(1.4) Das Gewinnen von Xerogel-Teilchen mit einem bestimmten Durchmesser ist an sich mit keiner Besonderheit verbunden. Es kann z.B. in einfacher Weise erfolgen, indem man das aus Stufe (1.3) erhaltene Produkt mahlt und durch Sieben fraktioniert.

(2) Zweite Stufe

Beim Beladen des Xerogels mit der Chromkomponente kann man zweckmäßigerweise so verfahren, daß man das Xerogel in einer Lösung von Chromtrioxid oder einer unter den Bedingungen der Stufe (3) in Chromtrioxid übergehenden Chromverbindung suspendiert (wobei die Mengen so gewählt werden, daß das gewünschte Mengenverhältnis Xerogel : Chrom sich ergibt) und unter dauernder, möglichst homogener Durchmischung des Ansatzes dessen flüssige Bestandteile - also Alkanon bzw. Alkanol sowie gegebenenfalls Wasser - abdampft. Hierbei ist es am zweckmäßigsten, bei Temperaturen von 20 bis 150°C und Drücken von 10 bis 760 Torr zu arbeiten. Nicht kritisch ist, wenn das mit der Chromkomponente beladene Xerogel noch eine gewisse Restfeuchte enthält (flüchtige Bestandteile nicht mehr als 20, insbesondere nicht mehr als 10 Gewichtsprozent, bezogen auf das Xerogel). - Im gegebenen Zusammenhang geeignete Chromkomponenten sind vor allem Chromtrioxid sowie Chromhydroxid, ferner lösliche Salze des dreiwertigen Chroms mit einer organischen oder anorganischen Säure, wie Acetat, Oxalat, Sulfat, Nitrat; besonders geeignet sind solche Salze derartiger Säuren, die beim Aktivieren rückstandsfrei in Chromtrioxid übergehen. Auch können Chromverbindungen in Form von Chelaten eingesetzt werden, wie Chromacetylacetonat.

(3) Dritte Stufe

Diese Stufe dient der Aktivierung des Katalysators; sie kann in einschlägig üblicher - aus Literatur und Praxis wohlbekannter - Weise durchgeführt werden, d.h. insbesondere unter Bedingungen, die gewährleisten, daß im fertigen Katalysator das Chrom - zumindest teilweise - nicht in einem anderen als dem sechswertigen Zustand vorliegt.

Kennzeichnendes Merkmal des erfindungsgemäßen Verfahrens ist, daß der im Vorstehenden beschriebene und an sich bekannte Chromtrioxid-Katalysator unter zusätzlicher Mitverwendung eines Dialkylaluminiumalkoxids der oben näher definierten Formel als Cokatalysator eingesetzt wird.

Namentliche Beispiele für geeignete Cokatalysatoren der bezeichneten Art sind: Diethylaluminiumethoxid, Dimethylaluminiummethoxid, Di-n-propylaluminiumethoxid, Diisobutylaluminiumisobutoxid, Diethylaluminiumisopropoxid, Di-n-octylaluminiumethoxid und Diethylaluminium-n-decoxid.

Hiervon eignen sich besonders gut die Dialkylaluminiumalkoxide, die sowohl in den Alkylgruppen als auch in der Alkoxigruppe jeweils 1 bis 8 Kohlenstoffatome aufweisen; - wobei das Diethylaluminiumethoxid herausragend gut geeignet ist.

Zu dem erfindungsgemäßen Verfahren als Ganzem ist schließlich das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren. Die erwähnten technologischen Ausgestaltungen - mit anderen Worten: die technologischen Varianten der Polymerisation von Olefinen nach Phillips - sind aus der Literatur und Praxis wohlbekannt, so dass sich nähere Ausführungen zu ihnen erübrigen. Zu bemerken ist allenfalls noch, daß die Katalysatoren außerhalb oder innerhalb des Polymerisationsgefäßes mit den Cokatalysatoren zusammengebracht werden können; im letztgenannten Fall etwa durch räumlich getrennten Eintrag der Komponenten, die im übrigen in Form einer Suspension (Katalysator) bzw. Lösung (Cokatalysator) gehandhabt werden können.

Des weiteren ist noch zu sagen, daß sich das neue Verfahren vornehmlich zum Herstellen von Copolymerisaten des Ethylens mit -Monoolefinen, wie Propen, Buten-1, Hexen-1 und Okten-1, eignet; es bietet sich jedoch auch an zum Herstellen von Homopolymerisaten des Ethylens. Die Mitverwendung von Molekulargewichtsreglern, wie insbesondere Wasserstoff, ist beim erfindungsgemäßen Verfahren mit gutem Erfolg möglich.

## Beispiel

### Herstellung des Kieselsäure-Xerogels

Es wurde eine in der Figur US-PS 3,872,217 dargestellte Mischdüse mit folgenden Daten benutzt: Der Durchmesser der zylindrischen, aus einem Kunststoffschlauch gebildeten Mischkammern betrug 14 mm, die Mischraumlänge (einschließlich Nachmischstrecke) 350 mm. Nahe der stirnseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm betrug. Für die primäre Mischzone war demnach das Verhältnis von Länge zu Durchmesser etwa gleich 10. Für die sich anschließende sekundäre Mischzone lag dieses Verhältnis bei 15. Als Spritzmundstück wurde ein flachgedrücktes,

leicht nierenförmig ausgebildetes Rohrstück über das Austrittsende des Kunststoffschlauches geschoben.

Beschickt wurde diese Mischvorrichtung mit 325 l/h 33-gewichtsprozentiger Schwefelsäure von 20°C mit einem Betriebsdruck von ca. 3 bar sowie 1 100 l/h Wasserglaslösung (hergestellt aus technischem Wasserglas mit 27 Gewichtsprozent $SiO_2$ und 8 Gewichtsprozent $Na_2O$ durch Verdünnung mit Wasser) mit einem Litergewicht von 1,20 kg/l und einer Temperatur von ebenfalls 20°C mit einem Druck von ebenfalls ca. 3 bar. In der mit dem Kunststoffschlauch ausgekleideten Mischkammer wurde durch fortschreitende Neutralisation ein unbeständiges Hydrosol mit einem pH-Wert zwischen 7 und 8 gebildet, das bis zur vollständigen Homogenisierung noch etwa 0,1 Sekunden in der Nachmischzone verblieb, bevor es durch das Düsenmundstück als fächerförmiger Flüssigkeitsstrahl in die Atmosphäre gespritzt wurde. Der Strahl zerteilte sich während des Fluges durch die Luft in einzelne Tropfen, die infolge der Oberflächenspannung in eine weitgehend kugelige Form übergingen und die noch während ihres Fluges innerhalb ca. einer Sekunde zu Hydrogel-Kugeln erstarrten. Die Kugeln hatten eine glatte Oberfläche, waren glasklar, enthielten etwa 17 Gewichtsprozent $SiO_2$ und hatten folgende Kornverteilung:

| | |
|---|---|
| $>8$ mm | 10 Gewichtsprozent |
| 6 - 8 mm | 45 Gewichtsprozent |
| 4 - 6 mm | 34 Gewichtsprozent |
| $<4$ mm | 11 Gewichtsprozent. |

Die Hydrogel-Kugeln wurden am Ende ihres Fluges in einem Waschturm aufgefangen, der nahezu vollständig mit Hydrogel-Kugeln gefüllt war, und in dem die Kugeln sofort ohne Alterung mit ca. 50°C warmem, schwach ammoniakalischem Wasser in einem kontinuierlich verlaufenden Gegenstromprozeß salzfrei gewaschen wurden.

Durch Sieben isolierte man die Kugeln, die einen Durchmesser im Bereich von 2 bis 6 mm hatten und füllte 112 kg dieser Kugeln in ein Extraktionsfaß mit Zulauf an der Oberseite, einem Siebboden und einem schwanenhalsförmigen Überlauf, welcher an der Faßunterseite angeschlossen war und den Flüssigkeitsstand im Faß so hoch hielt, daß die Hydrogel-Kugeln vollkommen mit Flüssigkeit bedeckt waren. Dann ließ man solange Ethanol mit einer Geschwindigkeit von 60 l/h zulaufen, bis die Dichte des am Überlauf austretenden Ethanol-Wassergemisches bis 0,826 $g/cm^3$ gesunken war; es waren dann etwa 95% des in dem Hydrogel enthaltenen Wassers extrahiert.

Die dabei erhaltenen Kugeln wurden bei 180°C unter einem Vakuum von 10 Torr 8 Stunden lang getrocknet; es trat dann unter den genannten Bedingungen während 30 Minuten kein Gewichtsverlust mehr auf.

Anschließend wurden die getrockneten Kugeln gemahlen und durch Sieben die Xerogel-Teile isoliert, die Durchmesser von 100 bis 200 µm hatten.

Herstellung des Katalysators

15 kg des oben beschriebenen Xerogels und 40 Liter einer etwa 1-gewichtsprozentigen Lösung von Chromtrioxid in Aceton wurden in einen Doppelkonusmischer gefüllt. Unter Rotation des von außen mit Dampf auf 110°C beheizten Mischers wurde dann im Wasserstrahlvakuum das Aceton abdestilliert.

Das dabei resultierende Produkt wurde in einem Fließbett, welches von Luft durchströmt wurde, für 4 Stunden auf eine Temperatur von 870°C erhitzt und dann wieder abgekühlt. Ab 140°C wurde das Fließbett von Stickstoff durchspült, um Sauerstoffspuren (die bei der Polymerisation stören) zu beseitigen.

Der so gewonnene Katalysator hatte einen analytisch ermittelten Chromgehalt von rund 0,0002 mol/g.

Polymerisation

Die Polymerisation wurde kontinuierlich durchgeführt in einem zylindrischen Polymerisationsreaktor, der ein Volumen von 1.500 l und ein Verhältnis von Höhe : Durchmesser von 2,1 : 1,0 hat, einen Wendelrührer aufwies und während der Polymerisation im kontinuierlich-stationären Zustand zu 5/7 seiner Höhe mit kleinteiligem Polymerisat als Polymerisationsmedium gefüllt war.

Im einzelnen war das Polymerisationsverfahren so ausgestaltet, daß das Polymerisationsmedium ein zentrisches Rührbett aus kleinteiligem Polymerisat war, mit den Maßgaben, daß

($b_1$) das Polymerisationsmedium im peripheren Bereich des Rührbetts nach oben und im zentralen Bereich des Rührbetts nach unten bewegt wurde, derart, daß im Rührbett eine Froudezahl von 2,67 gegeben war, und

($b_2$) im Polymerisationsmedium die Abfuhr der Polymerisationswärme im wesentlichen durch Entspannungskühlung erfolgte, derart, daß man

($b_{2.1}$) das zu polymerisierende Gemisch der Monomeren außerhalb des Reaktionsraumes auf eine Temperatur, die 70°C unter der Temperatur im Reaktionsmedium lag, sowie einen Druck, der 65 bar über dem Druck im Reaktionsmedium lag, brachte,

($b_{2.2}$) dieses Gemisch in überschüssiger Menge in das Rührbett entspannte,

($b_{2.3}$) den nicht durch Polymerisation verbrauchten Rest (= etwa 90 %) des Gemisches der Monomeren aus dem Reaktionsraum abzog, und

($b_{2.4}$) diesen Rest nach Ersetzen der durch Polymerisation verbrauchten Anteile der Monomeren sowie nach Wiederherstellen der für ($b_{2.1}$) gewählten Bedingungen der Temperatur und des Druckes im Kreislauf erneut in das Rührbett entspannte.

Unter diesen Bedingungen wurde bei einem konstant gehaltenen Druck im Reaktor von 35 bar mittels intermittierender Zugabe von 2,5 g/Stunde des oben beschriebenen Katalysators sowie 0,4 g/Stunde Diethylaluminiumethoxid als Cokatalysator (= einem Atomverhältnis Cr : Al von 1 : 6,3) ein Gemisch aus 89,4 Vol.-% Ethylen, 0,6 Vol.-% Buten-(1) sowie 10 Vol.-% Wasserstoff (als Molekulargewichtsregler) bei einer Temperatur von 109°C in Abwesenheit flüssiger Verdünnungsmittel polymerisiert.

Auf diese Weise entstanden im kontinuierlich-stationären Betrieb stündlich 106 kg grießförmiges Ethylen-Buten-(1)-Copolymerisat, die aus dem Reaktor ausgeschleust wurden.

Das Copolymerisat hatte die folgenden Kenndaten:

| | | |
|---|---|---|
| Schmelzindex (MFI 190°C/2,16 Kp, nach DIN 53 735) (Beim Granulieren des Materials unter einschlägig üblichen Bedingungen mittels eines Granulier-Extruders bei einer maximalen Massetemperatur von 198°C änderte sich dieser Wert praktisch nicht. | = | 0,27 g/10 min |
| Schüttgewicht (nach DIN 53 468) | = | 475 g/l |
| Spannungsrißbeständigkeit (ESCR (h), nach ASTM D-1693-70) | = | 101 h |
| Grenzviskosität (nach DIN 53 728) | = | 2,5 dl/g |

| | | |
|---|---|---|
| HL-Schmelzindex (HLMFI 190°C/21,6 Kp, nach DIN 53 735) | = | 27 g/10 min |
| Schubmodul G (nach DIN 53 445) | = | 717 $N/mm^2$. |

Vergleichsversuch

Es wurde in Identität zum Beispiel (auch hinsichtlich der Messung der Kenndaten) gearbeitet, mit der einzigen Ausnahme, daß kein Cokatalysator eingesetzt wurde.

Auf diese Weise entstanden stündlich 111 kg Copolymerisat.

Dessen Kenndaten waren die folgenden:

| | | |
|---|---|---|
| Schmelzindex (Beim Granulieren verringerte sich dieser Wert um 32%) | = | 0,3 g/10 min |
| Schüttgewicht | = | 485 g/1 |
| Spannungsrißbeständigkeit | = | 22 h |
| Grenzviskosität | = | 2,7 dl/g |
| HL-Schmelzindex | = | 16,5 g/10 min |
| Schubmodul G | = | 702 $N/mm^2$ |

0135090

Patentanspruch

Verfahren zum Herstellen von Ethylen-Homopolymerisaten sowie Ethylen-Copolymerisaten mit untergeordneten Mengen an einpolymerisierten $C_3$- bis $C_{12}$-α-Monoolefinen durch Polymerisation des bzw. der Monomeren bei Temperaturen von 30 bis 150°C und Drücken von 2 bis 150 bar, mittels eines Kieselsäure-Xerogel/Chromtrioxid-Katalysators, der erhalten wird, wenn man

(1) zunächst ein feinteiliges Kieselsäure-Xerogel herstellt, indem man

(1.1) von einem 10 bis 25, Gewichtsprozent Feststoff (berechnet als Siliciumdioxid) enthaltenden Kieselsäure-Hydrogel ausgeht, das weitgehend kugelförmig ist, einen Teilchendurchmesser im Bereich von 1 bis 8 mm hat und erhalten wird, indem man

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 % des in dem Hydrogel enthaltenen Wassers extrahiert,

(1.3) das dabei erhaltene entwässerte, mit der organischen Flüssigkeit behandelte Gel solange trocknet, bis bei 180°C unter einem Vakuum von 10 Torr während 30 Minuten kein Gewichtsverlust mehr auftritt (Xerogel-Bildung) und

(1.4) das so gewonnene Xerogel auf Teile mit einem Durchmesser von 20 bis 2000 μm bringt,

(2) dann dieses Xerogel (1) aus einer 0,05- bis 5-gewichtsprozentigen Lösung von Chromtrioxid in einem $C_3$- bis $C_5$-Alkanon oder einer 0,05- bis 15-gewichtsprozentigen Lösung einer unter den Bedingungen der

0135090

Stufe (3) in Chromtrioxid übergehenden Chromverbindung in einem $C_1$- bis $C_4$-Alkanol - wobei das jeweilige Lösungsmittel nicht mehr als 20 Gewichtsprozent Wasser enthalten darf - heraus unter Verdampfen des Lösungsmittels mit der gewünschten Menge Chrom belädt und

(3) schließlich das hierbei resultierende Produkt (2) in einem wasserfreien, Sauerstoff in einer Konzentration von über 10 Volumenprozent enthaltenden Gasstrom 10 bis 1 000 Minuten auf einer Temperatur von 400 bis 1 100°C hält,

dadurch gekennzeichnet, daß zusätzlich zum Katalysator ein Cokatalysator eingesetzt wird, der besteht aus einem Dialkylaluminiumalkoxid der Formel

$$R^1_2AlR^2,$$

worin stehen

$R^1$ für eine $C_1$- bis $C_{12}$- Alkylgruppe und

$R^2$ für eine $C_1$- bis $C_{12}$-Alkoxigruppe,

mit der Maßgabe, daß das Atomverhältnis Chrom in dem Katalysator : Aluminium in dem Cokatalysator 1 : 0,05 bis 1 : 100 beträgt.

Hur

Europäisches Patentamt

**EUROPÄISCHER RECHERCHENBERICHT**

0135090
Nummer der Anmeldung

EP 84 10 9098

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 959 178 (J.P. HOGAN) * Ansprüche 1-9 * --- | 1 | C 08 F 10/00<br>C 08 F 4/62 |
| X | US-A-4 025 707 (J.P. HOGAN) * Ansprüche 1-15 * --- | 1 | |
| X | US-A-3 878 179 (J.P. HOGAN) * Anspruch 1 * --- | 1 | |
| A,D | US-A-4 037 042 (H. MUELLER-TAMM et al.) * Ansprüche 1-7 * ----- | 1 | |
| | | | RECHERCHIERTE SACHGEBIETE (Int. Cl.4) |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 19-11-1984 | WEBER H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03 82